# EUROPÄISCHE PATENTSCHRIFT

(11) **EP 3 758 988 B1**
(45) Veröffentlichungstag und Bekanntmachung des Hinweises auf die Patenterteilung: **28.12.2022**
(21) Anmeldenummer: 19700860.0
(22) Anmeldetag: 07.01.2019
(51) Int. Cl.: B60T 13/66

(54) **MEHRKREISIGES HYDRAULISCH GESCHLOSSENES BREMSSYSTEM**
MULTI-CIRCUIT HYDRAULICALLY CLOSED BRAKING SYSTEM
SYSTÈME DE FREINAGE FERMÉ HYDRAULIQUE À PLUSIEURS CIRCUITS

(30) Priorität: 26.02.2018 DE 102018202887
(43) Veröffentlichungstag der Anmeldung: 06.01.2021
(73) Patentinhaber: Robert Bosch GmbH, 70442 Stuttgart (DE)
(72) Erfinder: STRENGERT, Stefan, 70469 Stuttgart (DE); FRIEDRICH, Thomas, 74379 Ingersheim (DE); DROTLEFF, Dirk, 71720 Oberstenfeld-Gronau (DE); KLEEMANN, Ralf, 71726 Benningen Am Neckar (DE)
(86) Internationale Anmeldenummer: PCT/EP2019/050234
(87) Internationale Veröffentlichungsnummer: WO 2019/161980

(56) Entgegenhaltungen:
- DE-A1-102009 001 135
- DE-A1-102013 227 066
- DE-A1-102015 206 572
- DE-A1-102016 201 261

## Beschreibung

Die Erfindung geht aus von einem mehrkreisigen hydraulisch geschlossenen Bremssystem, insbesondere für ein hochautomatisiertes oder autonomes Fahrzeug, nach der Gattung des unabhängigen Patentanspruchs 1. Gegenstand der vorliegenden Erfindung ist auch ein Betriebsverfahren für ein solches mehrkreisiges hydraulisch geschlossenes Bremssystem.

Aus dem Stand der Technik sind Fahrzeuge mit mindestens einer hochautomatisierten oder autonomen Fahrfunktion bekannt, welche zumindest teilweise eine tatsächliche Fahraufgabe übernehmen können. Dadurch können die Fahrzeuge hochautomatisiert oder autonom fahren, indem die Fahrzeuge beispielsweise den Straßenverlauf, andere Verkehrsteilnehmer oder Hindernisse selbständig erkennen und die entsprechenden Ansteuerbefehle im Fahrzeug berechnen sowie diese an die Aktuatoren im Fahrzeug weiterleitet, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel vorgesehen, die es dem Fahrer ermöglichen, jederzeit selbst in das Fahrgeschehen eingreifen zu können.

Zudem sind aus dem Stand der Technik Bremssysteme für Fahrzeuge bekannt, welche für eine Ansteuerung durch einen Fahrzeugführer mit einem hydraulischen Durchgriff ausgelegt sind. Dadurch ist bei Ausfall des Bremssystems gewährleistet, dass der Fahrer durch Betätigen des Bremspedals noch ausreichend Bremskraft auf die Räder des Fahrzeugs bringen kann. Diese Auslegung beeinflusst maßgeblich die Topologie heutiger Bremssysteme. So lässt sich beispielsweise die Größe eines Tandemhauptbremszylinders durch die Aufrechterhaltung einer guten Performance in der Rückfallebene begründen. Zudem können die Bremssysteme als sogenannte gekoppelte Bremssysteme oder Hilfskraftbremssysteme ausgeführt werden. Allerdings sind auch diese Systeme so realisiert, dass als Rückfallebene nach wie vor ein hydraulischer Durchgriff durch den Fahrer gegeben ist. Hilfskraftbremsanalagen sind für hochautomatisierte oder autonome Fahrzeuge ungeeignet, da dort während einer autonomen Fahrfunktion kein Fahrer mehr zum Verstärken da ist und das Bremssystem die Bremsenergie komplett selbstständig aufbauen muss.

Aus der DE 10 2009 001135 A1 ist ein Verfahren zur Betätigung einer hydraulisch geschlossenen Fahrzeugbremsanlage bekannt. Die Fahrzeugbremsanlage umfasst einen elektromechanischen Bremskraftverstärker und eine Radschlupfregelung. Hierbei wird die Fahrzeugbremsanlage mit dem Bremskraftverstärker in Situationen betätigt, bei denen ein Bremspedal nicht betätigt ist, beispielsweise zur Begrenzung einer Fahrzeuggeschwindigkeit oder einer Abstandsregelung zu einem vorausfahrenden Fahrzeug oder beim Einparken.

Aus der DE 10 2016 201261 A1 ist ein gattungsgemäßes mehrkreisiges hydraulisch geschlossenes Bremssystem für ein Kraftfahrzeug bekannt, welches eine erste Bremsenanordnung und eine zweite Bremsenanordnung umfasst. Ein erster hydraulischer Bremskreislauf ist mit der ersten Bremsenanordnung verbunden, und ein zweiter hydraulischer Bremskreislauf ist mit der zweiten Bremsenanordnung verbunden. Weiterhin ist ein erstes Steuermodul mit dem ersten hydraulischen Bremskreislauf und dem zweiten hydraulischen Bremskreislauf gekoppelt. Das erste Steuermodul ist dazu ausgebildet, einen Fluiddruck sowohl innerhalb des ersten hydraulischen Bremskreislaufs als auch innerhalb des zweiten hydraulischen Bremskreislaufs zu steuern. Ein zweites Steuermodul ist außerdem mit dem ersten hydraulischen Bremskreislauf und mit dem zweiten hydraulischen Bremskreislauf gekoppelt. Das zweite Steuermodul ist dazu ausgebildet, einen Fluiddruck sowohl innerhalb des ersten hydraulischen Bremskreislaufs als auch innerhalb des zweiten hydraulischen Bremskreislaufs unabhängig von dem ersten Steuermodul zu steuern. Das erste Steuermodul ist in Reihe mit dem zweiten Steuermodul in dem ersten und dem zweiten hydraulischen Bremskreislauf angeordnet. Zusätzlich sendet ein virtueller Fahrer einen Verzögerungswunsch an das erste Steuermodul und das zweite Steuermodul. Das erste Steuermodul und das zweite Steuermodul bestimmen einen gewünschten Druck auf Grundlage des Verzögerungswunsches. Das erste Bremssteuermodul steuert einen Fluiddruck sowohl innerhalb des ersten als auch des zweiten hydraulischen Bremskreislaufs, um den Verzögerungswunsch auszuführen. Das zweite Steuermodul überwacht einen Druck stromabwärts von dem ersten Steuermodul und vergleicht den überwachten Druck mit dem gewünschten Druck. Zur Druckbereitstellung umfasst das erste Steuermodul eine erste Pumpe, und das zweite Steuermodul umfasst eine zweite Pumpe.

Aus der DE 10 2013 227 066 A1 ist ein gattungsgemäßes Verfahren zum Betreiben eines hydraulischen Bremssystems bekannt, das eine erste Druckerzeugungseinheit mit einem Plungersystem sowie eine zweite Druckerzeugungseinheit mit einem Pumpensystem umfasst, wobei die erste Druckerzeugungseinheit mit der zweiten Druckerzeugungseinheit über erste Unterbrechungsmittel hydraulisch unterbrechbar unumfließbar derart verbunden ist, dass bei geschlossener Stellung des ersten Unterbrechungsmittels keine hydraulische Verbindung zwischen erster Druckerzeugungseinheit und zweiter Druckerzeugungseinheit mehr möglich ist, wobei in einer ersten Betriebsart der Radbremsdruck in dem wenigstens einen Radbremszylinder alleine mittels der ersten Bremsdruckerzeugungseinrichtung erzeugt wird und über die ersten Unterbrechungsmittel geleitet wird. Mittels der zweiten Druckerzeugungseinheit kann eine radindividuell Radbremsdruckmodulation durchgeführt werden. Bei Ausfall der ersten Druckerzeugungseinrichtung kann mittels der zweiten Bremsdruckerzeugungseinrichtung der Bremsdruck aufgebaut werden.

### Offenbarung der Erfindung

Das mehrkreisige hydraulisch geschlossene Bremssystem, insbesondere für ein hochautomatisiertes oder autonomes Fahrzeug, mit den Merkmalen des unabhängigen Patentanspruchs 1 und das korrespondierende Betriebsverfahren für ein solches mehrkreisiges hydraulisch geschlossenes Bremssystem mit den Merkmalen des unabhängigen Patentanspruchs 10 haben den Vorteil, dass eine einfache, robuste und kostengünstige Bremssystemarchitektur ohne mechanischen und/oder hydraulischen Durchgriff über den Fahrer zur Verfügung gestellt wird, welche auch im Fehlerfall durch ein geeignetes Redundanzkonzept eine ausreichende Bremsperformance ermöglicht.

Ausführungsformen der Erfindung weisen weniger Komponenten als bekannte Bremssysteme auf, da weniger Ventile, kein Pedalwegsimulator, kein Mechanismus, um den Fahrerdruck zu erzeugen, zu verstärken und weiterzuleiten erforderlich sind, so dass geringere Bremssystemkosten entstehen. Zudem ergeben sich geringere Systemkosten, da an den Radbremsen nur ein hydraulischer Anschluss vorhanden ist und keine Alternativlösungen mit zwei Anschlüssen im Bremssattel erforderlich sind, die auf unterschiedliche Kolben wirken. Des Weiteren weist der Fluidbehälter nur einen hydraulischen Anschluss pro Bremskreis auf und Alternativlösungen mit mehreren Anschlüssen sind überflüssig.

Außerdem ergeben sich geringere Integrationskosten beim Fahrzeughersteller, da die Ausführungsformen der Erfindung aufgrund der elektrischen Ansteuerung ohne mechanischen und/oder hydraulischen Durchgriff über den Fahrer einen einfachen Einbau, insbesondere für Rechts- und Linkslenker, ermöglichen und Einbauraum an der Spritzwand zwischen Motorraum und Fahrzeuginnenraum freigeben. Da keiner der Bremssystemaktuatoren an der Spritzwand montiert sein muss, können sich auch NVH-Vorteile (NVH: Noise, Vibration, Harshness "Geräusch, Vibration, Rauigkeit") ergeben. Aufgrund der kleineren Anzahl von Komponenten ergibt sich zudem ein geringeres Gewicht und Volumen im Vergleich zu bekannten Bremssystemen.

Durch die Aufteilung in ein Hauptsystem und ein Sekundärsystem kann einfach ein modulares Konzept mit zwei Baugruppen umgesetzt werden.

Ausführungsformen der vorliegenden Erfindung stellen ein mehrkreisiges hydraulisch geschlossenes Bremssystem, insbesondere für ein hochautomatisierte oder autonomes Fahrzeug, mit mindestens zwei Radbremsen, welche jeweils einem Bremskreis zugeordnet sind, zwei mehrkreisigen Druckerzeugern, welche zwischen einem Fluidbehälter und den mindestens zwei Radbremsen hydraulisch in Reihe geschaltet sind, und einer Hydraulikeinheit zur hydraulischen Verbindung der Druckerzeuger mit den mindestens zwei Radbremsen und zur individuellen Bremsdruckmodulation in den mindestens zwei Radbremsen zur Verfügung.

Hierbei ist ein erster Druckerzeuger als Plungersystem ausgeführt und einem Hauptsystem zugeordnet, welches eine erste Energieversorgung und eine erste Auswerte- und Steuereinheit zur Ansteuerung des ersten Druckerzeugers umfasst. Ein zweiter Druckerzeuger ist als Pumpensystem ausgeführt und einem Sekundärsystem zugeordnet, welches eine von der ersten Energieversorgung unabhängige zweite Energieversorgung und eine zweite Auswerte- und Steuereinheit umfasst. Zudem ist die Hydraulikeinheit dem Sekundärsystem zugeordnet, so dass die Komponenten der Hydraulikeinheit und der zweite Druckerzeuger von der zweiten Auswerte- und Steuereinheit angesteuert und von der zweiten Energieversorgung mit Energie versorgt werden.

Zudem wird ein Betriebsverfahren für ein solches mehrkreisiges hydraulisch geschlossenes Bremssystem, insbesondere für ein hochautomatisiertes oder autonomes Fahrzeug, vorgeschlagen. Hierbei erhöht oder reduziert oder hält im Normalbetrieb das Hauptsystem mittels des ersten Druckerzeugers den Druck in den Bremskreisen und das Sekundärsystem führt mittels des zweiten Druckerzeugers und der Hydraulikeinheit die individuelle Bremsdruckmodulation in den mindestens zwei Radbremsen aus. Bei Ausfall des Hauptsystems erhöht oder reduziert oder hält das Sekundärsystem mittels des zweiten Druckerzeugers und der Hydraulikeinheit den Druck in den Bremskreisen und führt die individuelle Bremsdruckmodulation in den mindestens zwei Radbremsen aus. Bei Ausfall des Sekundärsystems erhöht oder reduziert oder hält das Hauptsystem den Druck in den Bremskreisen und in den mindestens zwei Radbremsen mittels des ersten Druckerzeugers und die individuelle Bremsdruckmodulation in den mindestens zwei Radbremsen entfällt.

Unter einem hydraulisch geschlossen Bremssystem, wird ein Bremssystem verstanden, bei welchem während einer individuellen Bremsdruckmodulation abgelassenes Bremsfluid aus den Radbremsen in der Hydraulikeinheit gespeichert und über das Pumpensystem des Sekundärsystems wieder in den Bremskreis zurückgeführt werden kann. Dadurch ist im Vergleich zu einem offenen Bremssystem in vorteilhafter Weise kein Nachsaugen von Bremsfluid aus dem Fluidbehälter erforderlich, so dass auf Druckhaltephasen während des Nachsaugevorgangs verzichtet werden kann.

Durch die individuelle Bremsdruckmodulation in den einzelnen Radbremsen können in vorteilhafter Weise verschiedene Regelfunktionen, wie beispielsweise eine Blockierschutzregelung ABS, eine Antriebsschlupfregelung ASR, eine Fahrdynamikregelung FDR bzw. ESP zur Längs- und Querstabilisierung des Fahrzeugs umgesetzt werden. Da diese Regelfunktionen an sich bekannt sind wird hier nicht näher auf diese eingegangen.

Durch Ausführungsformen der Erfindung ist in vorteilhafter Weise bei Ausfall des Hauptsystems weiterhin die volle ESP-Funktionalität mit Längs- und Querstabilisierung vorhanden. Durch die Ausführung des ersten Druckerzeugers als Plungersystem ergibt sich eine gute NVH-Performance im Gesamtsystem und ein einfacheres und/oder genaueres Monitoring und eine verbesserte Regelung. Dies ermöglicht, dass sowohl Lage als auch Volumen- und Druckaufbauinformationen im Hauptsystem in Vergleich zu anderen Konzepten (Pumpensystem) einfacher und insbesondere genauer erfasst werden können. Durch die Ausführung des zweiten Druckerzeugers als Pumpensystem ergeben sich noch geringere Kosten, Bauraum und Gewicht im Vergleich zu anderen Konzepten (Plungersystem).

Unter der Auswerte- und Steuereinheit kann vorliegend ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Zur Erfassung der Sensorsignale sind Sensoreinheiten vorgesehen, unter welchen vorliegend Baugruppen verstanden werden, welche mindestens ein Sensorelement umfassen, welches eine physikalische Größe bzw. eine Änderung einer physikalischen Größe direkt oder indirekt erfasst und vorzugsweise in ein elektrisches Sensorsignal umwandelt. Dies kann beispielsweise über das Aussenden und/oder das Empfangen von Schallwellen und/oder elektromagnetischen Wellen und/oder über ein Magnetfeld bzw. die Änderung eines Magnetfelds und/oder das Empfangen von Satellitensignalen beispielsweise eines GPS-Signals erfolgen. Eine solche Sensoreinheit kann beispielsweise Beschleunigungssensorelemente, welche beschleunigungsrelevante Informationen des Fahrzeugs erfassen, und/oder Sensorelemente umfassen, welche Gegenstände und/oder Hindernisse und/oder andere crashrelevante Fahrzeugumfelddaten ermitteln und zur Auswertung zur Verfügung stellen. Solche Sensorelemente können beispielsweise auf Video- und/oder Radar- und/oder Lidar und/oder PMD- und/oder Ultraschall-Technologien basieren. Zudem können auch Signale und Informationen einer vorhandenen ABS-Sensorik und die im dafür vorgesehenen Steuergerät abgeleiteten Größen ausgewertet werden. Basierend auf den beschleunigungsrelevanten Informationen und/oder daraus ermittelten Größen können beispielsweise eine Fahrzeugbewegung und eine Fahrzeuglage im dreidimensionalen Raum geschätzt werden und zur Unfallerkennung ausgewertet werden.

Zur Positionsbestimmung des Fahrzeugs können beispielsweise globale Navigationssatellitensysteme GNSS (GNSS: Global Navigation Satellite System) eingesetzt werden. Hierbei wird GNSS als Sammelbegriff für die Verwendung bestehender und künftiger globaler Satellitensysteme wie NAVSTAR GPS (Global Positioning System) der Vereinigten Staaten von Amerika, GLONASS (Global Navigation Satellite System) der Russischen Föderation, Galileo der Europäischen Union, Beidou der Volksrepublik China usw. eingesetzt.

Unter einem hochautomatisierten oder autonomen Fahrzeug, wird ein Fahrzeug verstanden, welches mindestens eine hochautomatisierte oder autonome Fahrfunktion aufweist, welche zumindest teilweise eine tatsächliche Fahraufgabe übernehmen kann. Über diese mindestens eine hochautomatisierte oder autonome Fahrfunktion erkennt das Fahrzeug beispielsweise den Straßenverlauf, andere Verkehrsteilnehmer oder Hindernisse selbständig und berechnet die entsprechenden Ansteuerbefehle, welche an die Aktuatoren im Fahrzeug weiterleitet werden, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel, beispielsweise in Form von elektrischen oder elektronischen Betätigungselementen, vorgesehen, die es dem Fahrer ermöglichen, jederzeit selbst in das Fahrgeschehen eingreifen zu können. Der vom Fahrer mittels der Betätigungselemente erzeugte Bremswunsch wird dann über elektrische Signale an das Hauptsystem und/oder das Sekundärsystem weitergeleitet. Ein mechanischer und/oder hydraulischen Durchgriff durch den Fahrer ist jedoch nicht vorhanden.

Die mindestens eine Fahrfunktion wertet zur Trajektorienplanung von internen Sensoreinheiten erfasste Fahrzeugdaten wie ABS-Eingriffe, Lenkwinkel, Position, Richtung, Geschwindigkeit, Beschleunigung usw. und/oder Fahrzeugumfelddaten aus, welche beispielsweise über Kamera-, Radar-, Lidar- und/oder Ultraschallsensoreinheiten erfasst werden, und steuert die Auswerte- und Steuereinheiten des Hauptsystems und des Sekundärsystems entsprechend an, um einen gewünschten Bremsdruck zu erzeugen und/oder Stabilisierungsvorgänge in Längs- und/oder Querrichtung durch individuelle Bremsdruckmodulation in den Radbremsen zu realisieren.

Durch die in den abhängigen Ansprüchen aufgeführten Maßnahmen und Weiterbildungen sind vorteilhafte Verbesserungen des im unabhängigen Patentanspruch 1 angegebenen mehrkreisigen hydraulisch geschlossenen Bremssystems, insbesondere für ein hochautomatisiertes oder autonomes Fahrzeug, und des im unabhängigen Patentanspruch 10 angegebenen Betriebsverfahrens für ein solches mehrkreisiges hydraulisch geschlossenes Bremssystem, insbesondere für ein hochautomatisiertes oder autonomes Fahrzeug, möglich.

Besonders vorteilhaft ist, dass der Fluidbehälter eine erste Fluidkammer zur Fluidversorgung eines ersten Bremskreises und eine zweite Fluidkammer zur Fluidversorgung eines zweiten Bremskreises umfassen kann. Zudem kann das Plungersystem eine Kolben-Zylindereinheit mit zwei Kolben und zwei Kammern und mit einem Antrieb aufweisen, welcher die beiden Kolben gegen die Kraft von korrespondierenden Rückstellfedern zur Druckeinstellung in den Kammern bewegen kann. Hierbei kann eine erste Kammer dem ersten Bremskreis und eine zweite Kammer dem zweiten Bremskreis zugeordnet werden, wobei die Kolben-Zylindereinheit im stromlosen Zustand des ersten Druckerzeugers durchfließbar ist, so dass Bremsfluid aus dem Fluidbehälter durch den ersten Druckerzeuger zum zweiten Druckerzeuger gefördert werden kann. Des Weiteren kann das Pumpensystem eine erste Pumpe, welche dem ersten Bremskreis zugeordnet werden kann, eine zweite Pumpe, welche dem zweiten Bremskreis zugeordnet werden kann, und einen gemeinsamen Antrieb aufweisen, welcher die beiden Pumpen antreiben. Dadurch kann in vorteilhafter Weise eine durchgängige Zweikreisigkeit vom Fluidbehälter bis zu den Radbremsen umgesetzt werden, so dass die Anforderungen an die Leckageüberwachung gesenkt werden können.

In vorteilhafter Ausgestaltung des Bremssystems kann die Hydraulikeinheit für jede Radbremse jeweils ein Einlassventil und jeweils ein Auslassventil und für jeden Bremskreis jeweils ein Druckhalte- und Druckregelventil, jeweils ein Hochdruckschaltventil und jeweils einen Niederdruckspeicher umfassen. Die Einlassventile und die Druckhalte- und Druckregelventile können beispielsweise als regelbare stromlos offene Magnetventile ausgeführt werden. Die Auslassventile und die Hochdruckschaltventile können beispielsweise als elektromagnetische stromlos geschlossene Schaltventile ausgeführt werden. Durch diese Ausführung der Hydraulikeinheit ist es in vorteilhafter Weise möglich, bereits bekannte ESP-Systeme einzusetzen und über bereits existierenden Skaleneffekt (ESP wird millionenfach gebaut) sehr niedrige Gesamtsystemkosten zu erzielen. Des Weiteren kann eine erste Radbremse und eine zweite Radbremse dem ersten Bremskreis und eine dritte Radbremse und eine vierte Radbremse dem zweiten Bremskreis zugeordnet werden. Hierbei ist sowohl eine X-Aufteilung, d.h. die Radbremse des linken Vorderrads und die Radbremse des rechten Hinterrads sind dem ersten Bremskreis und die Radbremse des rechten Vorderrads und die Radbremse des linken Hinterrads sind dem zweiten Bremskreis zugeordnet, als auch eine 11-Aufteilung der Bremskreise möglich, d.h. die Radbremse des linken Vorderrads und die Radbremse des linken Hinterrads sind dem ersten Bremskreis und die Radbremse des rechten Vorderrads und die Radbremse des rechten Hinterrads sind dem zweiten Bremskreis zugeordnet.

In vorteilhafter Ausgestaltung des Betriebsverfahrens können im Normalbetrieb oder bei Ausfall des Sekundärsystems zur Druckerhöhung oder zur Druckreduzierung in den Bremskreisen die Druckhalte- und Druckregelventile in den stromlos offenen Zustand überführt und der Antrieb des Plungersystems angesteuert werden, um die Kolben zur Erhöhung des Drucks in den Bremskreisen in eine erste Richtung zu bewegen oder zur Reduzierung des Drucks in den Bremskreisen in eine der ersten Richtung entgegengesetzte zweite Richtung zu bewegen. Zudem können im Normalbetrieb oder bei Ausfall des Sekundärsystems zum Druckhalten in den Bremskreisen die Druckhalte- und Druckregelventile in den stromlos offenen Zustand überführt werden, wobei der Antrieb des Plungersystems die Kolben in ihrer aktuellen Position halten kann.

In weiterer vorteilhafter Ausgestaltung des Betriebsverfahrens können bei Ausfall des Hauptsystems zur Druckerhöhung in den Bremskreisen die Druckhalte- und Druckregelventile geschlossen und die Hochdruckschaltventile geöffnet werden und der Antrieb des zweiten Druckerzeugers kann angesteuert werden, um mittels der Pumpen den Druck zu erhöhen. Zudem können bei Ausfall des Hauptsystems zur Druckreduzierung in den Bremskreisen die Druckhalte- und Druckregelventile geöffnet werden. Des Weiteren können bei Ausfall des Hauptsystems zum Druckhalten in den Bremskreisen die Druckhalte- und Druckregelventile geschlossen werden.

In weiterer vorteilhafter Ausgestaltung des Betriebsverfahrens kann im Normalbetrieb oder bei Ausfall des Hauptsystems zur individuellen Druckerhöhung in einer zugeordneten Radbremse das zugehörige Einlassventil geöffnet und das zugehörige Auslassventil geschlossen werden. Zudem kann im Normalbetrieb oder bei Ausfall des Hauptsystems zum individuellen Druckhalten in einer zugeordneten Radbremse das zugehörige Einlassventil und das zugehörige Auslassventil geschlossen werden. Des Weiteren kann im Normalbetrieb oder bei Ausfall des Hauptsystems zur individuellen Druckreduzierung in einer zugeordneten Radbremse das zugehörige Einlassventil geschlossen und das zugehörige Auslassventil geöffnet werden.

In weiterer vorteilhafter Ausgestaltung des Betriebsverfahrens kann bei einem erkannten Leck in einer Radbremse das zugehörige Einlassventil geschlossen werden.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels eines erfindungsgemäßen mehrkreisigen hydraulisch geschlossenen Bremssystems, insbesondere für ein hochautomatisiertes oder autonomes Fahrzeug.
Fig. 2 zeigt ein schematisches hydraulisches Schaltbild des Bremssystems aus Fig. 1.

### Ausführungsformen der Erfindung

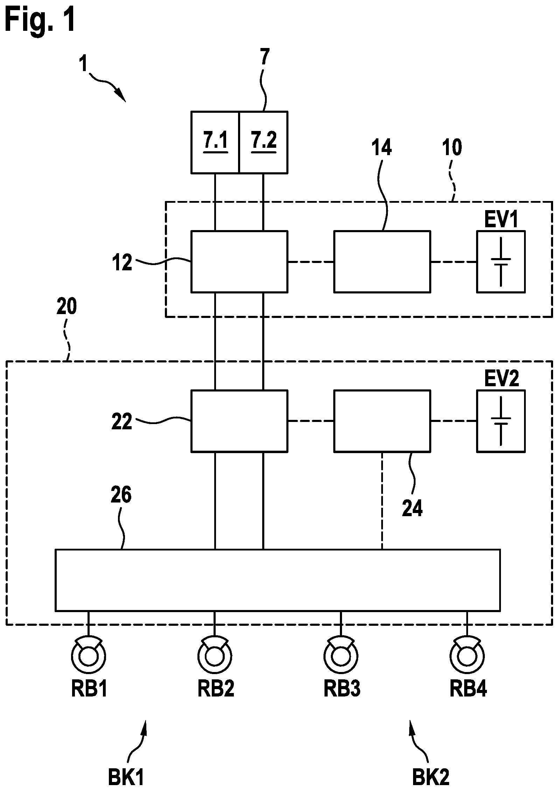

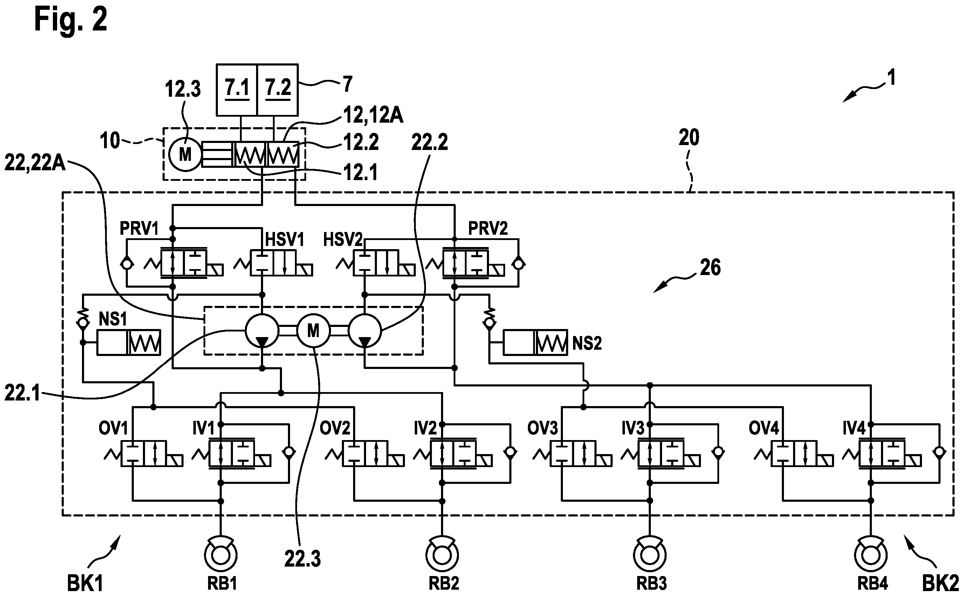

Wie aus Fig. 1 und 2 ersichtlich ist, umfasst das dargestellte Ausführungsbeispiel eines erfindungsgemäßen mehrkreisigen hydraulisch geschlossenen Bremssystems ,1 insbesondere für ein hochautomatisiertes oder autonomes Fahrzeug, mindestens zwei Radbremsen RB1, RB2, RB3, RB4, welche jeweils einem Bremskreis BK1, BK2 zugeordnet sind, zwei mehrkreisige Druckerzeugern 12, 22, welche zwischen einem Fluidbehälter 7 und den mindestens zwei Radbremsen RB1, RB2, RB3, RB4 hydraulisch in Reihe geschaltet sind, und eine Hydraulikeinheit 26 zur hydraulischen Verbindung der Druckerzeuger 12, 22 mit den mindestens zwei Radbremsen RB1, RB2, RB3, RB4 und zur individuellen Bremsdruckmodulation in den mindestens zwei Radbremsen RB1, RB2, RB3, RB4. Wie aus Fig. 2 weiter ersichtlich ist, ist ein erster Druckerzeuger 12 als Plungersystem 12A ausgeführt und einem Hauptsystem 10 zugeordnet, welches eine erste Energieversorgung EV1 und eine erste Auswerte- und Steuereinheit 14 zur Ansteuerung des ersten Druckerzeugers 12 umfasst, wie aus Fig. 1 weiter ersichtlich ist. Wie aus Fig. 2 weiter ersichtlich ist, ist ein zweiter Druckerzeuger 22 als Pumpensystem 22A ausgeführt und einem Sekundärsystem 20 zugeordnet, welches eine von der ersten Energieversorgung EV1 unabhängige zweite Energieversorgung EV2 und eine zweite Auswerte- und Steuereinheit 24 umfasst, wie aus Fig. 1 weiter ersichtlich ist. Hierbei ist die Hydraulikeinheit 26 dem Sekundärsystem 20 zugeordnet, so dass die Komponenten der Hydraulikeinheit 26 und der zweite Druckerzeuger 22 von der zweiten Auswerte- und Steuereinheit 24 angesteuert und von der zweiten Energieversorgung EV2 mit Energie versorgt werden.

Wie aus Fig. 1 und 2 weiter ersichtlich ist, umfasst das dargestellte Bremssystem 1 zwei Bremskreise BK1, BK2 und vier Radbremsen RB1, RB2, RB3, RB4, wobei eine erste Radbremse RB1 und eine zweite Radbremse RB2 einem ersten Bremskreis BK1 und eine dritte Radbremse RB3 und eine vierte Radbremse RB4 einem zweiten Bremskreis zugeordnet sind. Hierbei ist eine X-Aufteilung der Radbremsen RB1, RB2, RB3, RB4 auf die beiden Bremskreise BK1, BK2 möglich, d.h. die erste Radbremse RB1 ist am linken Vorderrad und die zweite Radbremse RB2 ist am rechten Hinterrad und die dritte Radbremse RB2 ist am rechten Vorderrad und die vierte Radbremse RB4 ist am linken Hinterrad angeordnet. Alternativ ist auch eine II-Aufteilung der Radbremsen RB1, RB2, RB3, RB4 auf die beiden Bremskreise BK1, BK2 möglich, d.h. die erste Radbremse RB1 ist am linken Vorderrad und die zweite Radbremse RB2 ist am linken Hinterrad und die dritte Radbremse RB2 ist am rechten Vorderrad und die vierte Radbremse RB4 ist am rechten Hinterrad angeordnet.

Wie aus Fig. 1 und 2 weiter ersichtlich ist, umfasst der Fluidbehälter 7 im dargestellten Ausführungsbeispiel eine erste Fluidkammer 7.1 zur Fluidversorgung des ersten Bremskreises BK1 und eine zweite Fluidkammer 7.2 zur Fluidversorgung des zweiten Bremskreises BK2.

Wie aus Fig. 2 weiter ersichtlich ist, weist das Plungersystem 12A im dargestellten Ausführungsbeispiel eine Kolben-Zylindereinheit mit zwei Kolben und zwei Kammern 12.1, 12.2 und mit einem Antrieb 12.3 auf, welcher als Elektromotor ausgeführt ist und die beiden Kolben gegen die Kraft von korrespondierenden Rückstellfedern zur Druckeinstellung in den Kammern 12.1, 12.2 bewegt. Hierbei ist eine erste Kammer 12.1 dem ersten Bremskreis BK1 und eine zweite Kammer 12.2 dem zweiten Bremskreis BK2 zugeordnet. Zudem ist die Kolben-Zylindereinheit im stromlosen Zustand des ersten Druckerzeugers 12 durchfließbar ausgeführt, so dass Bremsfluid aus dem Fluidbehälter 7 durch den ersten Druckerzeuger 22 zum zweiten Druckerzeuger 22 gefördert werden kann.

Wie aus Fig. 2 weiter ersichtlich ist, weist das Pumpensystem 22A im dargestellten Ausführungsbeispiel eine erste Pumpe 22.1, welche dem ersten Bremskreis BK1 zugeordnet ist, eine zweite Pumpe 22.2, welche dem zweiten Bremskreis BK2 zugeordnet ist, und einen gemeinsamen Antrieb 22.3 aufweist, welcher als Elektromotor ausgeführt ist und die beiden Pumpen 22.1, 22.2 antreibt.

Wie aus Fig. 2 weiter ersichtlich ist, umfasst die Hydraulikeinheit 26 im dargestellten Ausführungsbeispiel für jede Radbremse RB1, RB2, RB3, RB4 jeweils ein Einlassventil IV1, IV2, IV3, IV4 und jeweils ein Auslassventil OV1, OV2, OV3, OV4, wobei ein erstes Einlassventil IV1 und ein erstes Auslassventil OV1 der ersten Radbremse RB1 zugeordnet sind. Ein zweites Einlassventil IV2 und ein zweites Auslassventil OV2 sind der zweiten Radbremse RB2 zugeordnet, Ein drittes Einlassventil IV3 und ein drittes Auslassventil OV3 sind der dritten Radbremse RB3 zugeordnet, und ein viertes Einlassventil IV4 und ein viertes Auslassventil OV4 sind der vierten Radbremse RB4 zugeordnet. Zudem umfasst die Hydraulikeinheit 26 für jeden Bremskreis BK1 jeweils ein Druckhalte- und Druckregelventil PRV1, PRV2, jeweils ein Hochdruckschaltventil HSV1, HSV2 und jeweils einen Niederdruckspeicher NS1, NS2. Hierbei sind ein erstes Druckhalteund Druckregelventil PRV1 und ein erstes Hochdruckschaltventil HSV1 und ein erster Niederdruckspeicher NS1 dem ersten Bremskreis BK1 zugeordnet, und ein zweites Druckhalte- und Druckregelventil PRV2 und ein zweites Hochdruckschaltventil HSV2 und ein zweiter Niederdruckspeicher NS2 sind dem zweiten Bremskreis BK2 zugeordnet.

Wie aus Fig. 2 weiter ersichtlich ist, sind im dargestellten Ausführungsbeispiel die Einlassventile IV1, IV2, IV3, IV4 und die Druckhalte- und Druckregelventile PRV1, PRV2 jeweils als regelbare stromlos offene Magnetventile ausgeführt. Die Auslassventile OV1, OV2, OV3, OV4 und die Hochdruckschaltventile HSV1, HSV2 sind im dargestellten Ausführungsbeispiel als elektromagnetische stromlos geschlossene Schaltventile ausgeführt.

Da das erfindungsgemäße Bremssystem 1 als hydraulisch geschlossenes System ausgeführt ist, wird während einer individuellen Bremsdruckmodulation in einer Radbremse RB1, RB2, RB3, RB4 über ein zugeordnetes Auslassventil OV1, OV2, OV3, OV4 abgelassenes Bremsfluid aus den Radbremsen RB1, RB2, RB3, RB4 im dargestellten Ausführungsbespiel in einem zugeordneten Niederdruckspeicher NS1, NS2 gespeichert und über die zugeordnete Pumpe 22.1, 22.2 des Pumpensystems 22 oberhalb der Einlassventile IV1, IV2, IV3, IV4 wieder in den Bremskreis BK1, BK2 zurückgeführt. Im dargestellten Ausführungsbeispiel wird das aus den Radbremsen RB1, RB2 des ersten Bremskreises BK1 über die Auslassventile OV1, OV2 abgelassene Bremsfluid im ersten Niederdruckspeicher NS1 gespeichert und über die erste Pumpe 22.1 oberhalb der Einlassventile IV1, IV2 wieder dem ersten Bremskreis BK1 zugeführt. Das aus den Radbremsen RB3, RB4 des zweiten Bremskreises BK2 über die Auslassventile OV3, OV4 abgelassene Bremsfluid wird im zweiten Niederdruckspeicher NS2 gespeichert und über die zweite Pumpe 22.2 oberhalb der Einlassventile IV3, IV4 wieder dem zweiten Bremskreis BK2 zugeführt.

Bei dem erfindungsgemäßen Betriebsverfahren für das oben beschriebene mehrkreisige hydraulisch geschlossene Bremssystem 1, insbesondere für ein hochautomatisiertes oder autonomes Fahrzeug, erhöht oder reduziert oder hält im Normalbetrieb das Hauptsystem 10 mittels des ersten Druckerzeugers 12 den Druck in den Bremskreisen BK1, BK2. Zudem führt das Sekundärsystem 20 im Normalbetrieb mittels des zweiten Druckerzeugers 22 und der Hydraulikeinheit 26 die individuelle Bremsdruckmodulation in den Radbremsen RB1, RB2, RB3, RB4 aus. Bei Ausfall des Hauptsystems 10 erhöht oder reduziert oder hält das Sekundärsystem 20 mittels des zweiten Druckerzeugers 22 und der Hydraulikeinheit 26 den Druck in den Bremskreisen BK1, BK2 und führt die individuelle Bremsdruckmodulation in den mindestens zwei Radbremsen RB1, RB2, RB3, RB4 aus. Bei Ausfall des Sekundärsystems 20 erhöht oder reduziert oder hält das Hauptsystem 10 den Druck in den Bremskreisen BK1, BK2 und in den Radbremsen RB1, RB2, RB3, RB4 mittels des ersten Druckerzeugers 12 und die individuelle Bremsdruckmodulation in den Radbremsen RB1, RB2, RB3, RB4 entfällt.

Im Normalbetrieb oder bei Ausfall des Sekundärsystems 20 werden zur Druckerhöhung oder zur Druckreduzierung in den Bremskreisen BK1, BK2 die Druckhalte- und Druckregelventile PRV1, PRV2 in den stromlos offenen Zustand überführt und der Antrieb 12.3 des Plungersystems 12A wird angesteuert, um die Kolben zur Erhöhung des Drucks in den Bremskreisen BK1, BK2 in eine erste Richtung zu bewegen oder zur Reduzierung des Drucks in den Bremskreisen BK1, BK2 in eine der ersten Richtung entgegengesetzte zweite Richtung zu bewegen.

Zudem werden im Normalbetrieb oder bei Ausfall des Sekundärsystems 20 zum Druckhalten in den Bremskreisen BK1, BK2 die Druckhalte- und Druckregelventile PRV1, PRV2 in den stromlos offenen Zustand überführt und der Antrieb 12.3 des Plungersystems 12A hält die Kolben in ihrer aktuellen Position.

Des Weiteren werden bei Ausfall des Hauptsystems 10 zur Druckerhöhung in den Bremskreisen BK1, BK2 die Druckhalte- und Druckregelventile PRV1, PRV2 geschlossen und die Hochdruckschaltventile HSV1, HSV2 geöffnet. Zudem wird der Antrieb 22.3 des zweiten Druckerzeugers 22 angesteuert wird, um mittels der Pumpen 22.1, 22.2 den Druck in den Bremskreisen BK1, BK2 zu erhöhen. Außerdem werden bei Ausfall des Hauptsystems 10 zur Druckreduzierung in den Bremskreisen BK1, BK2 die Druckhalte- und Druckregelventile PRV1, PRV2 geöffnet. Zum Druckhalten in den Bremskreisen BK1, BK2 werden bei Ausfall des Hauptsystems 10 die Druckhalte- und Druckregelventile PRV1, PRV2 geschlossen.

Des Weiterem werden im Normalbetrieb oder bei Ausfall des Hauptsystems 10 zur individuellen Druckerhöhung in einer zugeordneten Radbremse RB1, RB2, RB3, RB4 das zugehörige Einlassventil IV1, IV2, IV3, IV4 geöffnet, und das zugehörige Auslassventil OV1, OV2, OV3, OV4 geschlossen. Zum individuellen Druckhalten in einer zugeordneten Radbremse RB1, RB2, RB3, RB4 werden im Normalbetrieb oder bei Ausfall des Hauptsystems 10 das zugehörige Einlassventil IV1, IV2, IV3, IV4 und das zugehörige Auslassventil OV1, OV2, OV3, OV4 geschlossen. Zur individuellen Druckreduzierung in einer zugeordneten Radbremse RB1, RB2, RB3, RB4 werden im Normalbetrieb oder bei Ausfall des Hauptsystems 10 das zugehörige Einlassventil IV1, IV2, IV3, IV4 geschlossen und das zugehörige Auslassventil OV1, OV2, OV3, OV4 geöffnet.

Außerdem wird bei einem erkannten Leck in einer Radbremse RB1, RB2, RB3, RB4 das zugehörige Einlassventil IV1, IV2, IV3, IV4 geschlossen.

Dieses Verfahren kann beispielsweise in Software oder Hardware oder in einer Mischform aus Software und Hardware beispielsweise in einem Steuergerät (10) implementiert sein.

Ausführungsformen der vorliegenden Erfindung stellen ein mehrkreisiges hydraulisch geschlossenes Bremssystem ohne mechanischen und/oder hydraulischen Durchgriff durch den Fahrer, insbesondere für ein hochautomatisiertes oder autonomes Fahrzeug, und ein korrespondierendes Betriebsverfahren zur Verfügung, wobei die eingesetzten hydraulisch in Reihe angeordneten Druckerzeuger durch die hydraulische Verschaltung über die Hydraulikeinheit auf alle Radbremsen des Fahrzeugs wirken.

## Patentansprüche

1. Mehrkreisiges hydraulisch geschlossenes Bremssystem (1), insbesondere für ein hochautomatisiertes oder autonomes Fahrzeug, mit mindestens zwei Radbremsen (RB1, RB2, RB3, RB4), welche jeweils einem Bremskreis (BK1, BK2) zugeordnet sind, zwei mehrkreisigen Druckerzeugern (12, 22), welche zwischen einem Fluidbehälter (7) und den mindestens zwei Radbremsen (RB1, RB2, RB3, RB4) hydraulisch in Reihe geschaltet sind, und einer Hydraulikeinheit (26) zur hydraulischen Verbindung der Druckerzeuger (12, 22) mit den mindestens zwei Radbremsen (RB1, RB2, RB3, RB4) und zur individuellen Bremsdruckmodulation in den mindestens zwei Radbremsen (RB1, RB2, RB3, RB4), wobei ein erster Druckerzeuger (12) einem Hauptsystem (10) zugeordnet ist, welches eine erste Energieversorgung (EV1) und eine erste Auswerte- und Steuereinheit (14) zur Ansteuerung des ersten Druckerzeugers (12) umfasst, wobei ein zweiter Druckerzeuger (22) als Pumpensystem (22A) ausgeführt und einem Sekundärsystem (20) zugeordnet ist, welches eine von der ersten Energieversorgung (EV1) unabhängige zweite Energieversorgung (EV2) und eine zweite Auswerte- und Steuereinheit (24) umfasst, wobei die Hydraulikeinheit (26) dem Sekundärsystem (20) zugeordnet ist, so dass die Komponenten der Hydraulikeinheit (26) und der zweite Druckerzeuger (22) von der zweiten Auswerte- und Steuereinheit (24) angesteuert und von der zweiten Energieversorgung (EV2) mit Energie versorgt werden, **dadurch gekennzeichnet, dass** der erste Druckerzeuger (12) als Plungersystem (12A) ausgeführt ist, wobei das Hauptsystem (10) im Normalbetrieb mittels des ersten Druckerzeugers (12) den Druck in den Bremskreisen (BK1, BK2) erhöht oder reduziert oder hält und das Sekundärsystem (20) mittels des zweiten Druckerzeugers (22) und der Hydraulikeinheit (26) die individuelle Bremsdruckmodulation in den mindestens zwei Radbremsen (RB1, RB2, RB3, RB4) ausführt, wobei das Sekundärsystem (20) bei Ausfall des Hauptsystems (10) mittels des zweiten Druckerzeugers (22) und der Hydraulikeinheit (26) den Druck in den Bremskreisen (BK1, BK2) erhöht oder reduziert oder hält und die individuelle Bremsdruckmodulation in den mindestens zwei Radbremsen (RB1, RB2, RB3, RB4) ausführt, und wobei das Hauptsystem (10) bei Ausfall des Sekundärsystems (20) den Druck in den Bremskreisen (BK1, BK2) und in den mindestens zwei Radbremsen (RB1, RB2, RB3, RB4) mittels des ersten Druckerzeugers (12) erhöht oder reduziert oder hält und die individuelle Bremsdruckmodulation in den mindestens zwei Radbremsen (RB1, RB2, RB3, RB4) entfällt.

2. Bremssystem (1) nach Anspruch 1, **dadurch gekennzeichnet, dass** der Fluidbehälter (7) eine erste Fluidkammer (7.1) zur Fluidversorgung eines ersten Bremskreises (BK1) und eine zweite Fluidkammer (7.2) zur Fluidversorgung eines zweiten Bremskreises (BK2) umfasst.

3. Bremssystem (1) nach Anspruch 1 oder 2, **dadurch gekennzeichnet, dass** das Plungersystem (12A) eine Kolben-Zylindereinheit mit zwei Kolben und zwei Kammern (12.1, 12.2) und mit einem Antrieb (12.3) aufweist, welcher die beiden Kolben gegen die Kraft von korrespondierenden Rückstellfedern zur Druckeinstellung in den Kammern (12.1, 12.2) bewegt.

4. Bremssystem (1) nach Anspruch 3, **dadurch gekennzeichnet, dass** eine erste Kammer (12.1) dem ersten Bremskreis (BK1) und eine zweite Kammer (12.2) dem zweiten Bremskreis (BK2) zugeordnet ist, wobei die Kolben-Zylindereinheit im stromlosen Zustand des ersten Druckerzeugers (12) durchfließbar ist, so dass Fluid aus dem Fluidbehälter (7) durch den ersten Druckerzeuger (22) zum zweiten Druckerzeuger (22) förderbar ist.

5. Bremssystem (1) nach einem der Ansprüche 1 bis 4, **dadurch gekennzeichnet, dass** das Pumpensystem (22A) eine erste Pumpe (22.1), welche dem ersten Bremskreis (BK1) zugeordnet ist, eine zweite Pumpe (22.2), welche dem zweiten Bremskreis (BK2) zugeordnet ist, und einen gemeinsamen Antrieb (22.3) aufweist, welcher die beiden Pumpen (22.1, 22.2) antreibt.

6. Bremssystem (1) nach einem der Ansprüche 1 bis 5, **dadurch gekennzeichnet, dass** die Hydraulikeinheit (26) für jede Radbremse (RB1, RB2, RB3, RB4) jeweils ein Einlassventil (IV1, IV2, IV3, IV4) und jeweils ein Auslassventil (OV1, OV2, OV3, OV4) und für jeden Bremskreis (BK1) jeweils ein Druckhalte- und Druckregelventil (PRV1, PRV2), jeweils ein Hochdruckschaltventil (HSV1, HSV2) und jeweils einen Niederdruckspeicher (NS1, NS2) umfasst.

7. Bremssystem (1) nach Anspruch 6, **dadurch gekennzeichnet, dass** die Einlassventile (IV1, IV2, IV3, IV4) und die Druckhalte- und Druckregelventile (PRV1, PRV2) als regelbare stromlos offene Magnetventile ausgeführt sind.

8. Bremssystem (1) nach Anspruch 6 oder 7, **dadurch gekennzeichnet, dass** die Auslassventile (OV1, OV2, OV3, OV4) und die Hochdruckschaltventile (HSV1, HSV2) als elektromagnetische stromlos geschlossene Schaltventile ausgeführt sind.

9. Bremssystem (1) nach einem der Ansprüche 1 bis 8, **dadurch gekennzeichnet, dass** eine erste Radbremse (RB1) und eine zweite Radbremse (RB2) dem ersten Bremskreis (BK1) und eine dritte Radbremse (RB3) und eine vierte Radbremse (RB4) dem zweiten Bremskreis zugeordnet sind.

10. Betriebsverfahren für ein mehrkreisiges hydraulisch geschlossenes Bremssystem (1), insbesondere für ein hochautomatisiertes oder autonomes Fahrzeug, welches nach zumindest einem der Ansprüche 1 bis 9 ausgeführt ist, wobei bei Ausfall des Hauptsystems (10) das Sekundärsystem (20) mittels des zweiten Druckerzeugers (22) und der Hydraulikeinheit (26) den Druck in den Bremskreisen (BK1, BK2) erhöht oder reduziert oder hält und die individuelle Bremsdruckmodulation in den mindestens zwei Radbremsen (RB1, RB2, RB3, RB4) ausführt, **dadurch gekennzeichnet, dass** im Normalbetrieb das Hauptsystem (10) mittels des ersten Druckerzeugers (12) den Druck in den Bremskreisen (BK1, BK2) erhöht oder reduziert oder hält und das Sekundärsystem (20) mittels des zweiten Druckerzeugers (22) und der Hydraulikeinheit (26) die individuelle Bremsdruckmodulation in den mindestens zwei Radbremsen (RB1, RB2, RB3, RB4) ausführt, und wobei bei Ausfall des Sekundärsystems (20) das Hauptsystem (10) den Druck in den Bremskreisen (BK1, BK2) und in den mindestens zwei Radbremsen (RB1, RB2, RB3, RB4) mittels des ersten Druckerzeugers (12) erhöht oder reduziert oder hält und die individuelle Bremsdruckmodulation in den mindestens zwei Radbremsen (RB1, RB2, RB3, RB4) entfällt.

11. Betriebsverfahren nach Anspruch 10, **dadurch gekennzeichnet, dass** im Normalbetrieb oder bei Ausfall des Sekundärsystems (20) zur Druckerhöhung oder zur Druckreduzierung in den Bremskreisen (BK1, BK2) die Druckhalte- und Druckregelventile (PRV1, PRV2) in den stromlos offenen Zustand überführt werden und der Antrieb (12.3) des Plungersystems (12A) angesteuert wird, um die Kolben zur Erhöhung des Drucks in den Bremskreisen (BK1, BK2) in eine erste Richtung zu bewegen oder zur Reduzierung des Drucks in den Bremskreisen (BK1, BK2) in eine der ersten Richtung entgegengesetzte zweite Richtung zu bewegen.

12. Betriebsverfahren nach Anspruch 10 oder 11, **dadurch gekennzeichnet, dass** im Normalbetrieb oder bei Ausfall des Sekundärsystems (20) zum Druckhalten in den Bremskreisen (BK1, BK2) die Druckhalte- und Druckregelventile (PRV1, PRV2) in den stromlos offenen Zustand überführt werden, wobei der Antrieb (12.3) des Plungersystems (12A) die Kolben in ihrer aktuellen Position hält.

13. Betriebsverfahren nach einem der Ansprüche 10 bis 12, **dadurch gekennzeichnet, dass** bei Ausfall des Hauptsystems (10) zur Druckerhöhung in den Bremskreisen (BK1, BK2) die Druckhalte- und Druckregelventile (PRV1, PRV2) geschlossen und die Hochdruckschaltventile (HSV1, HSV2) geöffnet werden und der Antrieb (22.3) des zweiten Druckerzeugers (22) angesteuert wird, um mittels der Pumpen (22.1, 22.2) den Druck zu erhöhen.

14. Betriebsverfahren nach einem der Ansprüche 10 bis 13, **dadurch gekennzeichnet, dass** bei Ausfall des Hauptsystems (10) zur Druckreduzierung in den Bremskreisen (BK1, BK2) die Druckhalte- und Druckregelventile (PRV1, PRV2) geöffnet werden.

15. Betriebsverfahren nach einem der Ansprüche 10 bis 14, **dadurch gekennzeichnet, dass** bei Ausfall des Hauptsystems (10) zum Druckhalten in den Bremskreisen (BK1, BK2) die Druckhalte- und Druckregelventile (PRV1, PRV2) geschlossen werden.

16. Betriebsverfahren nach einem der Ansprüche 10 bis 15, **dadurch gekennzeichnet, dass** im Normalbetrieb oder bei Ausfall des Hauptsystems (10) zur individuellen Druckerhöhung in einer zugeordneten Radbremse (RB1, RB2, RB3, RB4) das zugehörige Einlassventil (IV1, IV2, IV3, IV4) geöffnet und das zugehörige Auslassventil (OV1, OV2, OV3, OV4) geschlossen wird.

17. Betriebsverfahren nach einem der Ansprüche 10 bis 16, **dadurch gekennzeichnet, dass** im Normalbetrieb oder bei Ausfall des Hauptsystems (10) zum individuellen Druckhalten in einer zugeordneten Radbremse (RB1, RB2, RB3, RB4) das zugehörige Einlassventil (IV1, IV2, IV3, IV4) und das zugehörige Auslassventil (OV1, OV2, OV3, OV4) geschlossen werden.

18. Betriebsverfahren nach einem der Ansprüche 10 bis 17, **dadurch gekennzeichnet, dass** im Normalbetrieb oder bei Ausfall des Hauptsystems (10) zur individuellen Druckreduzierung in einer zugeordneten Radbremse (RB1, RB2, RB3, RB4) das zugehörige Einlassventil (IV1, IV2, IV3, IV4) geschlossen und das zugehörige Auslassventil (OV1, OV2, OV3, OV4) geöffnet werden.

19. Betriebsverfahren nach einem der Ansprüche 10 bis 18, **dadurch gekennzeichnet, dass** bei einem erkannten Leck in einer Radbremse (RB1, RB2, RB3, RB4) das zugehörige Einlassventil (IV1, IV2, IV3, IV4) geschlossen wird.

## Claims

1. Multi-circuit hydraulically closed brake system (1), in particular for a highly automated or autonomous vehicle, having at least two wheel brakes (RB1, RB2, RB3, RB4) which are each assigned to a brake circuit (BK1, BK2), having two multi-circuit pressure generators (12, 22) which are hydraulically connected in series between a fluid container (7) and the at least two wheel brakes (RB1, RB2, RB3, RB4), and having a hydraulic unit (26) for hydraulic connection of the pressure generators (12, 22) to the at least two wheel brakes (RB1, RB2, RB3, RB4) and for individual brake-pressure modulation in the at least two wheel brakes (RB1, RB2, RB3, RB4), wherein a first pressure generator (12) is assigned to a main system (10), which main system comprises a first energy supply (EV1) and a first evaluation and control unit (14) for controlling the first pressure generator (12), wherein a second pressure generator (22) is in the form of a pump system (22A) and is assigned to a secondary system (20), which secondary system comprises a second energy supply (EV2), which is independent of the first energy supply (EV1), and a second evaluation and control unit (24), wherein the hydraulic unit (26) is assigned to the secondary system (20), so that the components of the hydraulic unit (26) and the second pressure generator (22) are controlled by the second evaluation and control unit (24) and are supplied with energy by the second energy supply (EV2), **characterized in that** the first pressure generator (12) is in the form of a plunger system (12A), wherein during normal operation, the main system (10), by means of the first pressure generator (12), increases or reduces or maintains the pressure in the brake circuits (BK1, BK2) and the secondary system (20), by means of the second pressure generator (22) and the hydraulic unit (26), performs the individual brake-pressure modulation in the at least two wheel brakes (RB1, RB2, RB3, RB4), wherein the secondary system (20), in the event of failure of the main system (10), by means of the second pressure generator (22) and the hydraulic unit (26), increases or reduces or maintains the pressure in the brake circuits (BK1, BK2) and performs the individual brake-pressure modulation in the at least two wheel brakes (RB1, RB2, RB3, RB4), and wherein, in the event of failure of the secondary system (20), the main system (10) increases or reduces or maintains the pressure in the brake circuits (BK1, BK2) and in the at least two wheel brakes (RB1, RB2, RB3, RB4) by means of the first pressure generator (12) and the individual brake-pressure modulation in the at least two wheel brakes (RB1, RB2, RB3, RB4) is not applied.

2. Brake system (1) according to Claim 1, **characterized in that** the fluid container (7) comprises a first fluid chamber (7.1) for supply of fluid to a first brake circuit (BK1) and a second fluid chamber (7.2) for supply of fluid to a second brake circuit (BK2).

3. Brake system (1) according to Claim 1 or 2, **characterized in that** the plunger system (12A) has a piston/cylinder unit with two pistons and two chambers (12.1, 12.2) and with a drive (12.3) which moves the two pistons counter to the force of corresponding restoring springs for setting of the pressure in the chambers (12.1, 12.2).

4. Brake system (1) according to Claim 3, **characterized in that** a first chamber (12.1) is assigned to the first brake circuit (BK1) and a second chamber (12.2) is assigned to the second brake circuit (BK2), wherein the piston/cylinder unit is able to be flowed through in the electrically deenergized state of the first pressure generator (12) such that fluid is able to be conveyed from the fluid container (7) through the first pressure generator (22) to the second pressure generator (22).

5. Brake system (1) according to one of Claims 1 to 4, **characterized in that** the pump system (22A) has a first pump (22.1), which is assigned to the first brake circuit (BK1), a second pump (22.2), which is assigned to the second brake circuit (BK2), and a common drive (22.3), which drives the two pumps (22.1, 22.2).

6. Brake system (1) according to one of Claims 1 to 5, **characterized in that**, for each wheel brake (RB1, RB2, RB3, RB4), the hydraulic unit (26) comprises in each case one inlet valve (IV1, IV2, IV3, IV4) and in each case one outlet valve (OV1, OV2, OV3, OV4) and, for each brake circuit (BK1), said hydraulic unit comprises in each case one pressure-maintaining and pressure-regulating valve (PRV1, PRV2), in each case one high-pressure switching valve (HSV1, HSV2) and in each case one low-pressure accumulator (NS1, NS2).

7. Brake system (1) according to Claim 6, **characterized in that** the inlet valves (IV1, IV2, IV3, IV4) and the pressure-maintaining and pressure-regulating valves (PRV1, PRV2) are in the form of regulable solenoid valves which are open in the electrically deenergized state.

8. Brake system (1) according to Claim 6 or 7, **characterized in that** the outlet valves (OV1, OV2, OV3, OV4) and the high-pressure switching valve (HSV1, HSV2) are in the form of electromagnetic switching valves which are closed in the electrically deenergized state.

9. Brake system (1) according to one of Claims 1 to 8, **characterized in that** a first wheel brake (RB1) and a second wheel brake (RB2) are assigned to the first brake circuit (BK1) and a third wheel brake (RB3) and a fourth wheel brake (RB4) are assigned to the second brake circuit.

10. Operating method for a multi-circuit hydraulically closed brake system (1), in particular for a highly automated or autonomous vehicle, which is designed according to at least one of Claims 1 to 9, wherein, in the event of failure of the main system (10), the secondary system (20), by means of the second pressure generator (22) and the hydraulic unit (26), increases or reduces or maintains the pressure in the brake circuits (BK1, BK2) and performs the individual brake-pressure modulation in the at least two wheel brakes (RB1, RB2, RB3, RB4), **characterized in that**, during normal operation, the main system (10), by means of the first pressure generator (12), increases or reduces or maintains the pressure in the brake circuits (BK1, BK2) and the secondary system (20), by means of the second pressure generator (22) and the hydraulic unit (26), performs the individual brake-pressure modulation in the at least two wheel brakes (RB1, RB2, RB3, RB4), and wherein, in the event of failure of the secondary system (20), the main system (10) increases or reduces or maintains the pressure in the brake circuits (BK1, BK2) and in the at least two wheel brakes (RB1, RB2, RB3, RB4) by means of the first pressure generator (12) and the individual brake-pressure modulation in the at least two wheel brakes (RB1, RB2, RB3, RB4) is not applied.

11. Operating method according to Claim 10, **characterized in that**, during normal operation or in the event of failure of the secondary system (20), for increase of pressure or for reduction of pressure in the brake circuits (BK1, BK2), the pressure-maintaining and pressure-regulating valves (PRV1, PRV2) are transferred into the electrically deenergized open state and the drive (12.3) of the plunger system (12A) is controlled so as to move the pistons in a first direction for increasing the pressure in the brake circuits (BK1, BK2) or to move said pistons in a second direction, opposite the first direction, for reducing the pressure in the brake circuits (BK1, BK2).

12. Operating method according to Claim 10 or 11, **characterized in that**, during normal operation or in the event of failure of the secondary system (20), for maintenance of pressure in the brake circuits (BK1, BK2), the pressure-maintaining and pressure-regulating valves (PRV1, PRV2) are transferred into the electrically deenergized open state, wherein the drive (12.3) of the plunger system (12A) keeps the pistons in their present position.

13. Operating method according to one of Claims 10 to 12, **characterized in that**, in the event of failure of the main system (10), for increase of pressure in the brake circuits (BK1, BK2), the pressure-maintaining and pressure-regulating valves (PRV1, PRV2) are closed and the high-pressure switching valves (HSV1, HSV2) are opened and the drive (22.3) of the second pressure generator (22) is controlled so as to increase the pressure by means of the pumps (22.1, 22.2).

14. Operating method according to one of Claims 10 to 13, **characterized in that**, in the event of failure of the main system (10), for reduction of pressure in the brake circuits (BK1, BK2), the pressure-maintaining and pressure-regulating valves (PRV1, PRV2) are opened.

15. Operating method according to one of Claims 10 to 14, **characterized in that**, in the event of failure of the main system (10), for maintenance of pressure in the brake circuits (BK1, BK2), the pressure-maintaining and pressure-regulating valves (PRV1, PRV2) are closed.

16. Operating method according to one of Claims 10 to 15, **characterized in that**, during normal operation or in the event of failure of the main system (10), for individual increase of pressure in an associated wheel brake (RB1, RB2, RB3, RB4), the associated inlet valve (IV1, IV2, IV3, IV4) is opened and the associated outlet valve (OV1, OV2, OV3, OV4) is closed.

17. Operating method according to one of Claims 10 to 16, **characterized in that**, during normal operation or in the event of failure of the main system (10), for individual maintenance of pressure in an associated wheel brake (RB1, RB2, RB3, RB4), the associated inlet valve (IV1, IV2, IV3, IV4) and the associated outlet valve (OV1, OV2, OV3, OV4) are closed.

18. Operating method according to one of Claims 10 to 17, **characterized in that**, during normal operation or in the event of failure of the main system (10), for individual reduction of pressure in an associated wheel brake (RB1, RB2, RB3, RB4), the associated inlet valve (IV1, IV2, IV3, IV4) is closed and the associated outlet valve (OV1, OV2, OV3, OV4) is opened.

19. Operating method according to one of Claims 10 to 18, **characterized in that**, in the event of a detected leak in a wheel brake (RB1, RB2, RB3, RB4), the associated inlet valve (IV1, IV2, IV3, IV4) is closed.

## Revendications

1. Système de freinage hydraulique fermé à plusieurs circuits (1), notamment pour un véhicule hautement automatisé ou autonome, avec au moins deux freins de roue (RB1, RB2, RB3, RB4), qui sont associés chacun à un circuit de freinage (BK1, BK2), deux générateurs de pression à plusieurs circuits (12, 22), qui sont montés hydrauliquement en série entre un réservoir de fluide (7) et les au moins deux freins de roue (RB1, RB2, RB3, RB4), et une unité hydraulique (26) pour relier hydrauliquement les générateurs de pression (12, 22) aux au moins deux freins de roue (RB1, RB2, RB3, RB4) et pour moduler individuellement la pression de freinage dans les au moins deux freins de roue (RB1, RB2, RB3, RB4), un premier générateur de pression (12) étant associé à un système principal (10) qui comprend une première alimentation en énergie (EV1) et une première unité d'évaluation et de commande (14) pour commander le premier générateur de pression (12), un deuxième générateur de pression (22) étant réalisé sous forme de système de pompe (22A) et étant associé à un système secondaire (20) qui comprend une deuxième alimentation en énergie (EV2) indépendante de la première alimentation en énergie (EV1) et une deuxième unité d'évaluation et de commande (24), l'unité hydraulique (26) étant associée au système secondaire (20), de telle sorte que les composants de l'unité hydraulique (26) et le deuxième générateur de pression (22) sont commandés par la deuxième unité d'évaluation et de commande (24) et alimentés en énergie par la deuxième alimentation en énergie (EV2), **caractérisé en ce que** le premier générateur de pression (12) est réalisé sous forme de système à plongeur (12A), le système principal (10), en mode d'exploitation normal, augmentant ou réduisant ou maintenant la pression dans les circuits de freinage (BK1, BK2) au moyen du premier générateur de pression (12), et le système secondaire (20), au moyen du deuxième générateur de pression (22) et de l'unité hydraulique (26), réalisant la modulation individuelle de la pression de freinage dans les au moins deux freins de roue (RB1, RB2, RB3, RB4) ; en cas de défaillance du système principal (10), le système secondaire (20) augmentant ou réduisant ou maintenant la pression dans les circuits de freinage (BK1, BK2) au moyen du deuxième générateur de pression (22) et de l'unité hydraulique (26) et réalisant la modulation individuelle de la pression de freinage dans les au moins deux freins de roue (RB1, RB2, RB3, RB4), et, en cas de défaillance du système secondaire (20), le système principal (10) augmentant ou réduisant ou maintenant la pression dans les circuits de freinage (BK1, BK2) et dans les au moins deux freins de roue (RB1, RB2, RB3, RB4) au moyen du premier générateur de pression (12) et supprimant la modulation individuelle de la pression de freinage dans les au moins deux freins de roue (RB1, RB2, RB3, RB4).

2. Système de freinage (1) selon la revendication 1, **caractérisé en ce que** le réservoir de fluide (7) comprend une première chambre de fluide (7.1) pour l'alimentation en fluide d'un premier circuit de freinage (BK1) et une deuxième chambre de fluide (7.2) pour l'alimentation en fluide d'un deuxième circuit de freinage (BK2).

3. Système de freinage (1) selon la revendication 1 ou 2, **caractérisé en ce que** le système à plongeur (12A) présente une unité piston-cylindre avec deux pistons et deux chambres (12.1, 12.2) et avec un entraînement (12.3), lequel déplace les deux pistons contre la force de ressorts de rappel correspondants pour le réglage de la pression dans les chambres (12.1, 12.2).

4. Système de freinage (1) selon la revendication 3, **caractérisé en ce qu'**une première chambre (12.1) est associée au premier circuit de freinage (BK1) et une deuxième chambre (12.2) est associée au deuxième circuit de freinage (BK2), l'unité piston-cylindre pouvant être traversée à l'état sans courant du premier générateur de pression (12), de telle sorte que du fluide peut être acheminé du réservoir de fluide (7) à travers le premier générateur de pression (22) vers le deuxième générateur de pression (22).

5. Système de freinage (1) selon l'une quelconque des revendications 1 à 4, **caractérisé en ce que** le système de pompe (22A) présente une première pompe (22.1) qui est associée au premier circuit de freinage (BK1), une deuxième pompe (22.2) qui est associée au deuxième circuit de freinage (BK2) et un entraînement commun (22.3) qui entraîne les deux pompes (22.1, 22.2).

6. Système de freinage (1) selon l'une quelconque des revendications 1 à 5, **caractérisé en ce que** l'unité hydraulique (26) comprend, pour chaque frein de roue (RB1, RB2, RB3, RB4), une soupape d'admission (IV1, IV2, IV3, IV4) et une soupape de sortie (OV1, OV2, OV3, OV4) et, pour chaque circuit de freinage (BK1), une soupape de maintien de la pression et de régulation de la pression (PRV1, PRV2), une soupape de commutation haute pression (HSV1, HSV2) et un accumulateur basse pression (NS1, NS2).

7. Système de freinage (1) selon la revendication 6, **caractérisé en ce que** les soupapes d'admission (IV1, IV2, IV3, IV4) et les soupapes de maintien de la pression et de régulation de la pression (PRV1, PRV2) sont réalisées sous forme de soupapes magnétiques réglables ouvertes sans courant.

8. Système de freinage (1) selon la revendication 6 ou 7, **caractérisé en ce que** les soupapes de sortie (OV1, OV2, OV3, OV4) et les soupapes de commutation haute pression (HSV1, HSV2) sont réalisées sous forme de soupapes de commutation électromagnétiques fermées sans courant.

9. Système de freinage (1) selon l'une quelconque des revendications 1 à 8, **caractérisé en ce qu'**un premier frein de roue (RB1) et un deuxième frein de roue (RB2) sont associés au premier circuit de freinage (BK1) et un troisième frein de roue (RB3) et un quatrième frein de roue (RB4) sont associés au deuxième circuit de freinage.

10. Procédé d'exploitation d'un système de freinage hydraulique fermé à plusieurs circuits (1), notamment pour un véhicule hautement automatisé ou autonome, qui est réalisé selon au moins l'une quelconque des revendications 1 à 9 ; en cas de défaillance du système principal (10), le système secondaire (20), au moyen du deuxième générateur de pression (22) et de l'unité hydraulique (26), augmentant ou réduisant ou maintenant la pression dans les circuits de freinage (BK1, BK2) et réalisant la modulation individuelle de la pression de freinage dans les au moins deux freins de roue (RB1, RB2, RB3, RB4), **caractérisé en ce qu'**en mode d'exploitation normal, le système principal (10) augmente ou réduit ou maintient la pression dans les circuits de freinage (BK1, BK2) au moyen du premier générateur de pression (12), et le système secondaire (20) réalise la modulation individuelle de la pression de freinage dans les au moins deux freins de roue (RB1, RB2, RB3, RB4) au moyen du deuxième générateur de pression (22) et de l'unité hydraulique (26), et, en cas de défaillance du système secondaire (20), le système principal (10) augmentant ou réduisant ou maintenant la pression dans les circuits de freinage (BK1, BK2) et dans les au moins deux freins de roue (RB1, RB2, RB3, RB4) au moyen du premier générateur de pression (12), et supprimant la modulation individuelle de la pression de freinage dans les au moins deux freins de roue (RB1, RB2, RB3, RB4).

11. Procédé d'exploitation selon la revendication 10, **caractérisé en ce que**, en mode d'exploitation normal ou en cas de défaillance du système secondaire (20), pour augmenter la pression ou réduire la pression dans les circuits de freinage (BK1, BK2), les soupapes de maintien de la pression et de régulation de la pression (PRV1, PRV2) sont transférées à l'état ouvert sans courant et l'entraînement (12.3) du système à plongeur (12A) est commandé pour déplacer les pistons dans une première direction pour augmenter la pression dans les circuits de freinage (BK1, BK2) ou dans une deuxième direction opposée à la première direction pour réduire la pression dans les circuits de freinage (BK1, BK2).

12. Procédé d'exploitation selon la revendication 10 ou 11, **caractérisé en ce que**, en mode d'exploitation normal ou en cas de défaillance du système secondaire (20), pour maintenir la pression dans les circuits de freinage (BK1, BK2), les soupapes de maintien de la pression et de régulation de la pression (PRV1, PRV2) sont transférées à l'état ouvert sans courant, l'entraînement (12.3) du système à plongeur (12A) maintenant les pistons dans leur position actuelle.

13. Procédé d'exploitation selon l'une quelconque des revendications 10 à 12, **caractérisé en ce que**, en cas de défaillance du système principal (10), pour augmenter la pression dans les circuits de freinage (BK1, BK2), les soupapes de maintien de la pression et de régulation de la pression (PRV1, PRV2) sont fermées et les soupapes de commutation haute pression (HSV1, HSV2) sont ouvertes et l'entraînement (22.3) du deuxième générateur de pression (22) est commandé pour augmenter la pression au moyen des pompes (22.1, 22.2).

14. Procédé d'exploitation selon l'une quelconque des revendications 10 à 13, **caractérisé en ce que**, en cas de défaillance du système principal (10), pour réduire la pression dans les circuits de freinage (BK1, BK2), les soupapes de maintien de pression de la pression et de régulation de pression (PRV1, PRV2) sont ouvertes.

15. Procédé d'exploitation selon l'une quelconque des revendications 10 à 14, **caractérisé en ce que**, en cas de défaillance du système principal (10), pour maintenir la pression dans les circuits de freinage (BK1, BK2), les soupapes de maintien de la pression et de régulation de la pression (PRV1, PRV2) sont fermées.

16. Procédé d'exploitation selon l'une quelconque des revendications 10 à 15, **caractérisé en ce que**, en mode d'exploitation normal ou en cas de défaillance du système principal (10), pour augmenter individuellement la pression dans un frein de roue associé (RB1, RB2, RB3, RB4), la soupape d'admission associée (IV1, IV2, IV3, IV4) est ouverte et la soupape de sortie associée (OV1, OV2, OV3, OV4) est fermée.

17. Procédé d'exploitation selon l'une quelconque des revendications 10 à 16, **caractérisé en ce que**, en mode d'exploitation normal ou en cas de défaillance du système principal (10), pour maintenir individuellement la pression dans un frein de roue associé (RB1, RB2, RB3, RB4), la soupape d'admission associée (IV1, IV2, IV3, IV4) et la soupape de sortie associée (OV1, OV2, OV3, OV4) sont fermées.

18. Procédé d'exploitation selon l'une quelconque des revendications 10 à 17, **caractérisé en ce que**, en mode d'exploitation normal ou en cas de défaillance du système principal (10), pour réduire individuellement la pression dans un frein de roue associé (RB1, RB2, RB3, RB4), la soupape d'admission associée (IV1, IV2, IV3, IV4) est fermée et la soupape de sortie associée (OV1, OV2, OV3, OV4) est ouverte.

19. Procédé d'exploitation selon l'une quelconque des revendications 10 à 18, **caractérisé en ce que**, lorsqu'une fuite est détectée dans un frein de roue (RB1, RB2, RB3, RB4), la soupape d'admission associée (IV1, IV2, IV3, IV4) est fermée.
